(19) Europäisches Patentamt
European Patent Office
Office européen des brevets

(11) EP 2 670 102 B1

(12) # EUROPEAN PATENT SPECIFICATION

(45) Date of publication and mention of the grant of the patent:
**30.03.2016 Bulletin 2016/13**

(51) Int Cl.:
***H04L 27/26*** *(2006.01)*

(21) Application number: **12170264.1**

(22) Date of filing: **31.05.2012**

(54) **METHOD AND DEVICE FOR SYNCHRONIZING A RECEIVER ON RECEIVED PREAMBLE SYMBOL**

VERFAHREN UND VORRICHTUNG ZUR SYNCHRONISIERUNG EINES EMPFÄNGERS AUF EMPFANGENEN PRÄAMBELSYMBOLEN

PROCÉDÉ ET DISPOSITIF POUR SYNCHRONISER UN RÉCEPTEUR SUR UN SYMBOLE REÇU AU PRÉALABLE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**04.12.2013 Bulletin 2013/49**

(73) Proprietors:
- **Mitsubishi Electric R&D Centre Europe B.V.**
  **1119 NS Schiphol Rijk (NL)**
  Designated Contracting States:
  **FR**
- **Mitsubishi Electric Corporation**
  **Chiyoda-ku**
  **Tokyo 100-8310 (JP)**
  Designated Contracting States:
  **AL AT BE BG CH CY CZ DE DK EE ES FI GB GR HR HU IE IS IT LI LT LU LV MC MK MT NL NO PL PT RO RS SE SI SK SM TR**

(72) Inventor: **Bouttier, Arnaud**
**35708 RENNES Cedex 7 (FR)**

(74) Representative: **Maillet, Alain**
**Cabinet Le Guen Maillet**
**5, place Newquay**
**B.P. 70250**
**35802 Dinard Cedex (FR)**

(56) References cited:
**EP-A2- 1 178 642**

- **Tzi-Dar Chiueh, Pei-Yun Tsai: "OFDM Baseband Receiver Design for Wireless Communications", 1 January 2007 (2007-01-01), Wiley, Singapore, XP002686432, pages 99-100, * page 100 ***

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 670 102 B1

## Description

The present invention relates generally to a method and a device for synchronizing a receiver on received preamble symbol modulated by an orthogonal frequency division multiplexing scheme.

Digital modulations may suffer from severe degradations when transmitted over time dispersive propagation channels. The signal at the receiver is then built as the superposition of several delayed and scattered replica of the transmitted signal. If the channel delay spread exceeds the symbol period $T$ of the transmitted signal, means to compensate for the inter-symbol interference (ISI) due to multipath propagation have to be implemented at the receiver. It is common nowadays to rely on the orthogonal frequency division multiplexing (OFDM) modulation that makes it possible to compensate for multipath effects with a reasonable complexity.

If the OFDM symbol duration $T$ significantly exceeds the channel delay spread, the effect of the channel reduces to a simple fading that can be compensated for with a scalar complex coefficient. What makes the OFDM modulation so popular is that it combines a good robustness to channel degradation with a good spectral efficiency thanks to the use of orthogonal subcarriers, i.e. with a subcarrier spacing equal to the inverse of the symbol rate ($1/T$). When the channel is also varying in time, the Doppler spread prevents from making the subcarrier spacing arbitrarily small, thus making the symbol period significantly longer than the channel delay spread. To overcome this limitation, it is common to add in front of the useful part of the OFDM symbol with duration $T$ a guard interval which is meant to hide the ISI from the receiver. In such a case, the subcarrier spacing is kept to $1/T$ but the overall or total symbol duration is now $T_t = T+T_{GI}$, where $T_{GI}$ is the duration of the guard interval, thus leading to a loss in spectral efficiency. The transmitted signal can be expressed as follows:

$$y(t) = \sum_{n=0}^{N-1} \sum_{k=0}^{M-1} x_k^{(n)} \Pi_{[0,T_t]}(t-kT_t) e^{2j\pi \frac{n}{T}(t-kT_t-T_{GI})}$$

where $N$ is the number of subcarriers, $M$ the number of OFDM symbols in the block, $x_k^{(n)}$ the modulation symbol carried by the subcarrier with index $n$ over the symbol period with index $k$ and where $\Pi(t)$ is the rectangular window defined as:

$$\Pi_{[0,\Psi]}(t) = \begin{cases} 1 & \text{if } t \in [0,\Psi[ \\ 0 & \text{otherwise} \end{cases}$$

If the OFDM modulation is both robust to channel degradations and implementation friendly thanks to OFDM modulation and demodulation by Fast Fourier Transform (FFT), it is also very sensitive to time and frequency synchronization errors. At first, it is critical to synchronize the sampling clock frequency so as to capture $N$ samples per symbol period $T$ and thus observe orthogonal subcarriers spaced $1/T$ Hz apart. Otherwise, the system suffers from ISI and Inter-Carrier Interference (ICI). Much in the same way, the receiver shall acquire the carrier frequency to avoid ICI and guarantee the subcarrier orthogonality. In the time domain, the receiver is also due to localize over each symbol overall period $T_t$ the position of the useful part with duration T where there is no ISI, i.e. the optimal position of the Fast Fourier Transform (FFT) window. The receiver can actually compute the FFT on any window with duration $T$ starting within the Guard Interval as long as there is no more ISI. The time interval between the optimal position, i.e. the useful part of the symbol, and the actual position of the FFT window is named hereinafter the time offset. The time offset introduces an exponential modulation term in the demodulated subcarriers (linear ramp in the phase domain).

The document EP1178642 discloses time synchronization in OFDM. Coarse time offset is estimated in the time domain and used to correct the received signal. An FFT is then performed. A channel estimate is generated by dividing the output of the FFT by known training symbols and IFFT is performed on the result. Peak detection is performed on the output of the IFFT to estimate a fine time offset, which is used to correct the time offset of the next received OFDM symbol.

The same applies in the frequency domain where the receiver is often able to estimate the carrier frequency offset modulo $1/T$ named hereinafter the fractional frequency offset, e.g. using the traditional sliding autocorrelation method with delay $T$. It is thus required to further detect the actual position of the modulated subcarriers within the OFDM multiplex named hereinafter the integer carrier frequency offset that often contains null subcarriers on the band edges. The position of the modulated subcarriers over the FFT multiplex is defined according to an array containing the indices of the non-zero subcarriers and named hereinafter the Carrier Distribution Sequence (CDS).

The present invention aims at providing a method and a device which enable synchronizing on received preamble symbol modulated by an orthogonal frequency division multiplexing scheme which is robust to noise and Doppler effect and which consumes few hardware and/or software resource.

The invention is as defined in the independent claims.

Thus, the present invention enables refining the time synchronisation of the receiver leading to the improvement of the overall demodulation performance with a low complexity.

According to a particular feature, the effect of the time offset is compensated in the time domain by time shifting the input of the orthogonal frequency division multiplexing demodulation for next received orthogonal division multiplexing symbol using the second time offset or by multiplying the output of the orthogonal frequency division multiplexing demodulation with the conjugate of a complex exponential term due to the second time offset in the frequency domain.

Thus, the present invention allows an estimation of the integer frequency offset that can be used to drive an automatic frequency control algorithm and/or enables to identify accurately the positions of the subcarriers carrying information bits leading to an improved demodulation.

As only a second discrete Fourier transform needs to be computed, the demodulation may be implemented with low complexity. This feature makes the present invention particularly suitable for the single carrier - frequency division multiplexing access (SC-FDMA) technique also known as the DFT-spread orthogonal frequency multiplexing (DFT-spread OFDM) modulation or also the single carrier - orthogonal frequency division multiplexing (SC-OFDM) modulation that implies a DFT precoding in addition to an inverse discrete Fourier transform modulation IDFT.

According to a particular feature, the device further comprises:

- means for modifying the output of the orthogonal frequency division multiplexing demodulation by correcting the effect of the second time offset and the integer carrier frequency offset,
- means for demodulating the output of the modified orthogonal frequency division multiplexing demodulation.

Thus, the proposed invention appears as a relevant solution for the situations where the preamble symbol itself carries information that needs to be demodulated where no *a priori* information on the channel is available to perform the demodulation by equalization on the preamble symbol.

According to a particular feature, the preamble symbol is compatible with 3GPP/LTE standard, or compatible with IEEE802.11 or IEEE802.16 standard.

Thus, the present invention can be applied to improve the synchronisation and overall demodulation performance of many different systems making it versatile and a good candidate for hardware implementation in ASIC.

According to a particular feature, the preamble symbol is compatible with Digital Video Broadcasting - Terrestrial standard or Digital Video Broadcasting-Second Generation Terrestrial standard or Integrated Services Digital Broadcasting-Terrestrial standard.

Thus, the present invention provides a means to acquire with improved performance and low complexity the signalling bits carried out in the preamble symbols that are critical to parameterize the receiver so as to demodulate the following orthogonal frequency division multiplexing symbols.

According to a particular feature, the modulation wherein at least the phase on subcarriers on which preamble symbol is mapped is modified according to the binary information value of the preamble sequence carried by the subcarrier is a Binary Phase Shift keying (BPSK) modulation or a Quadrature Amplitude Modulation (QAM) including the Quaternary Phase Shift keying (QPSK) modulation.

Thus, the proposed solution does not restrict to preambles modulated according to the BPSK modulation but can also be applied to preambles modulated with a quadrature modulation, typically the QPSK but also QAM schemes even if they are not robust enough to carry signalling.

According to a particular feature, the device further:

- memorizes plural determined integer frequency carrier offsets, time offsets and fractional frequency carriers on consecutive preamble symbols.
- filters at least a part of the memorized integer frequency carrier offsets, second time offsets and fractional frequency carrier offsets in order to obtain a corrected integer frequency carrier offset, a corrected time offset and a corrected fractional frequency carrier offset based stored measurements.

Thus, the performance of the present invention can be further improved by removing noise degradation through filtering.

According to still another aspect, the present invention concerns computer programs which can be directly loadable into a programmable device, comprising instructions or portions of code for implementing the steps of the methods according to the invention, when said computer programs are executed on a programmable device.

Since the features and advantages relating to the computer programs are the same as those set out above related to the methods and apparatuses according to the invention, they will not be repeated here.

The characteristics of the invention will emerge more clearly from a reading of the following description of an example of embodiment, the said description being produced with reference to the accompanying drawings, among which:

Fig. 1 represents a telecommunication network in which the present invention is implemented;
Fig. 2 is a diagram representing the architecture of a receiver;
Fig. 3a discloses a block diagram of components of a wireless interface of the receiver for synchronizing a OFDM preamble symbols according to the present invention;
Fig. 3b discloses a block diagram of components of a wireless interface of the receiver for synchronizing the OFDM preamble symbols according to a particular mode of realization of the present invention;
Fig. 4 discloses an example of an algorithm executed by the receiver for synchronizing on OFDM preamble symbols;
Fig. 5 discloses a block diagram of components of a wireless interface of the receiver for synchronizing and demodulating OFDM preamble symbols which carry data that need to be demodulated;
Fig. 6 discloses an example of an algorithm executed by the receiver for synchronizing and demodulating preamble symbols which carry data that need to be demodulated.

**Fig. 1** represents a telecommunication network in which the present invention is implemented.

The present invention is applicable in any telecommunication network wherein OFDM modulation scheme is used.

The telecommunication network is for example a telecommunication network in which at least one source Srct transfers or broadcasts signals within an area in which at least one receiver Rec is located.

The source Srct is for example a terrestrial station or a satellite which broadcast signals complying with DVB (Digital Video Broadcast) standards.

The telecommunication network is for example a cellular telecommunication network complying with the 3GPP/LTE standards, in which a base station transfers signals to a mobile terminal or broadcasts signals to at least two mobile terminals.

The receiver Rec may be a mobile terminal to which data like video signals are broadcasted or a mobile terminal which is in communication with a remote telecommunication device like a mobile phone or with a server or a base station or a home base station which receives signals from the mobile terminal.

Only one source Srct is shown in the Fig. 1 for the sake of simplicity, but the network may comprise a more important number of sources Srct.

Only one receiver Rec is shown in the Fig. 1 for the sake of simplicity, but signals may be transferred or broadcasted to a more important number of receivers Rec.

The signals received by the receiver Rec are OFDM symbols for example compatible with Third Generation Partnership Long Term Evolution (3GPP/LTE) standard, or compatible with IEEE802.11 or IEEE802.16 standard or compatible with digital broadcasting standards like Digital Video Broadcasting- Terrestrial (DVB-T), Digital Video Broadcasting- Second Generation Terrestrial (DVB-T2), or Integrated Services Digital Broadcasting- Terrestrial (ISDB-T).

According to the invention, the receiver Rec comprises:

- a device for synchronizing a receiver on received preamble symbol modulated by an orthogonal frequency division multiplexing scheme, wherein the device for synchronizing the receiver comprises:
- means for executing a coarse synchronization which provides an estimate of a first time offset and fractional frequency offset,
- means for removing the fractional frequency offset from the preamble symbol,
- means for performing, using the first estimate of the time offset, an orthogonal frequency division multiplexing demodulation on the preamble symbol on which the fractional frequency offset is removed,
- means for removing from the subcarriers of the demodulated preamble symbol effect of a phase shift keying modulation,
- means for performing an inverse discrete Fourier transform on the demodulated preamble symbol on which effect of a modulation wherein at least the phase on subcarriers on which preamble symbol is mapped is modified according to the binary information value of the preamble sequence carried by the subcarrier,
- means for determining a second time offset from the output of the inverse discrete Fourier transform,
- means for compensating the effect of the time offset for next received orthogonal division multiplexing symbol using the second time offset.

According to a particular feature, the device for synchronizing the receiver on received preamble symbol further comprises:

- means for multiplying an inverse discrete Fourier transform of an array containing binary values equal to one at the indices of the non-zero subcarriers on which the preamble symbol is mapped by the time-shifted output of the inverse discrete Fourier transform,
- means for performing a discrete Fourier transform on the output of the multiplying means,
- means for determining an integer carrier frequency offset from the output of the discrete Fourier transform.
- means for compensating the effect of the carrier frequency offset for next received orthogonal division multiplexing symbol using the determined integer carrier frequency offset. It has to be noted here that the present invention will be disclosed in examples wherein OFDM symbols have at least one guard interval. The present invention is also applicable on OFDM symbols having no guard interval.

Fig. 2 is a diagram representing the architecture of a receiver in which the present invention is implemented.
The receiver Rec has, for example, an architecture based on components connected together by a bus 201 and a processor 200 controlled by the program as disclosed in Fig. 4 or 6.
It has to be noted here that the receiver Rec may have an architecture based on dedicated integrated circuits.
The bus 201 links the processor 200 to a read only memory ROM 202, a random access memory RAM 203 and a wireless interface 205.
The memory 203 contains registers intended to receive variables and the instructions of the program related to the algorithm as disclosed in Fig. 4 or 6.
The processor 200 controls the operation of the wireless interface 205.
The read only memory 202 contains instructions of the program related to the algorithm as disclosed in Fig. 4 or 6, which are transferred, when the receiver Rec is activated, to the random access memory 203.
The wireless interface 205 comprises means for receiving radio signals transferred or broadcasted by the source Srct.
The wireless interface 205 is connected to at least one antenna Ant used for receiving radio signals transferred or broadcasted by the source Srct.
The wireless interface 205 comprises components as disclosed in Fig. 3a or 3b or 5.
**Fig. 3a** discloses a block diagram of components of the wireless interface of the receiver for synchronizing OFDM preamble symbols according to the present invention.
It is assumed here that the OFDM preamble symbol does not carry signalling data that are required to demodulate the following symbols and then do not need to be demodulated in that particular purpose. The wireless interface 205 may be implemented within a Digital Signal Processor (DSP), a Field-Programmable Gate Array (FPGA), an Application-Specific Integrated circuit (ASIC). The wireless interface 205 of the receiver Rec comprises a coarse synchronization module 300 which performs a coarse synchronization in the time and frequency domains. The coarse synchronization module 300 provides an estimate of a time offset, named first time offset and a fractional frequency offset.
Synchronization is generally achieved using dedicated OFDM symbols called reference or pilot symbols known at the receiver Rec. These symbols are sometimes called preamble symbols as they are generally transmitted at the beginning of the physical entity that carries the information on the radio channel. The physical entity is sometime named a frame, or a sub-frame, or a slot. The preamble is often built as the repetition of at least one reference symbol that uniquely identifies the transmitted signal and allows for a fast and robust localization of the preamble by means of autocorrelation(s). For example, the preamble is built as the repetition of twice the same pattern with duration $T_A=T/2$.
The coarse synchronization module 300 performs a sliding autocorrelation. When the autocorrelation window falls on the preamble, then the autocorrelation produces a peak that can be detected above the noise generated elsewhere.
It has to be noted here that the autocorrelation may be performed on the preamble symbols or on any repetition involving at least a part of a guard interval like for example a cyclic prefix and the following useful part of the preamble symbol.
A useful part of a symbol is the part on which the FFT window should ideally be applied. The useful part of the symbol carries all relevant information of the symbol.
The autocorrelation function enables a coarse time synchronization which provides a first time offset and further provides an estimate of the fractional part of the frequency carrier offset with respect to the autocorrelation delay.
For example, let's assume the transmission of a preamble built in two equal parts as described above. The received signal is given by:

$$x(t) = \overline{x}(t)e^{2j\pi\Delta ft + j\phi_0}$$

where $\overline{x}(t)$ is the transmitted signal, $\Delta f$ the carrier frequency offset and $\phi_0$ a phase offset. When positioned onto the preamble, the autocorrelation given to the pattern duration $T_A$ is given by:

$$\Gamma_x(\tau)\big|_{\tau=T_A} = \int_0^{T_A} x(t)x^*(t-T_A)dt$$
$$e^{-2j\pi\Delta f T_A}\int_0^{T_A}|p(t)|^2 dt$$

The frequency offset is estimated by looking at the argument of the autocorrelation peak that indicates the position of the preamble in the received signal.

The carrier frequency offset with respect to the preamble duration can be expressed as an integer and fractional parts:

$$\Delta f = m\frac{1}{T_A} + \varepsilon\frac{1}{T_A}, \text{where } m \in \mathbf{Z} \text{ and } \varepsilon \in [-0.5, +0,5[$$

Then, we have:

$$e^{2j\pi\Delta f T_A} = e^{2j\pi(m+\varepsilon)} = e^{2j\pi\varepsilon}$$

It has to be noted here that the autocorrelation enables the estimation of the fractional frequency offset but not the integer offset that must be estimated differently.

The wireless interface 205 of the receiver Rec comprises a fractional frequency offset removal 301 which removes from the received preamble symbol the fractional frequency offset determined by the coarse synchronization module 300.

The wireless interface 205 of the receiver Rec comprises an OFDM demodulation module 302 which performs an OFDM demodulation of the preamble symbol on which fractional frequency offset is removed. The OFDM demodulation is performed by means of a Discrete Fourier Transform (DFT) usually implemented using a FFT algorithm. The demodulated preamble symbol is affected by an exponential modulation resulting from the improper time synchronization. To simplify the derivations, no channel degradations are assumed. After DFT, if no channel degradations occur, the demodulated preamble symbol can be expressed as:

$$y_n = a_n e^{-2j\pi n\frac{\tau}{T}}, n = 0,\ldots,N-1$$

where $a_n$ is the symbol carried out by the subcarrier with rank *n,* either taken from a Binary Phase Shift keying (BPSK) alphabet or equal to zero for the non modulated subcarriers. For example, BPSK symbols defined as:

$$a_n = \pm 1 \times e^{j\alpha}$$

where $\alpha$ is an arbitrary a phase offset.

The wireless interface 205 of the receiver Rec comprises a modulation removal module 303 which cancels out the BPSK modulation by multiplying the demodulated symbol by itself:

$$z_n = y_n \times y_n = y_n^2, \quad n = 0,\ldots,N-1$$

Thus we have:

$$
\begin{aligned}
z_n &= a_n e^{+2j\pi n\frac{\tau}{T}} \times a_n e^{-2j\pi n\frac{\tau}{T}} \\
&= \pm 1 \times \pm 1 \times e^{2j\alpha} \times e^{-2j\pi n 2\frac{\tau}{T}} \\
&= e^{2j\alpha} \times e^{-2j\pi n 2\frac{\tau}{T}} = e^{2j\alpha} \times e^{-2j\pi \frac{n}{N} 2\frac{\tau}{T_s}}
\end{aligned}
$$

where $T_s=T/N$ is the sampling frequency. As shown by the above formula, the BPSK modulation has been withdrawn and it remains a complex exponential with frequency $2\tau/T$.

It can be noted here that the present invention is also applicable to Quadrature Phase Shift Keying (QPSK) or Quadrature Amplitude Modulation (QAM) alphabets by rising the demodulated subcarriers at the power of four in order to remove the modulation.

The wireless interface 205 of the receiver Rec comprises an Inverse Discrete Fourier Transform (IDFT) module 304 which takes the *N*-IDFT of the complex exponential.

It has to be noted here that in order to facilitate the peak detection, a P-IDFT with $P>N$ and zero padding may be used instead of the *N*-IDFT, in order to improve the resolution of the IDFT.

The wireless interface 205 of the receiver Rec comprises peak detection module 305 which estimates the time offset $\tau$ on the output of the IDFT module which corresponds to the first significant peak for time dispersive channels or to the highest peak.

It can be noticed that the exponential modulation is weighted by an unknown phase offset that does not affect the detection of the time offset $\tau$. More generally, the observation would also be affected by another unknown phase offset resulting from the mismatch between the source Srct and receiver Rec local oscillators.

If a *P*-IDFT is performed, the algorithm is applied here to all subcarriers, whatever they are modulated or not. As long as enough subcarriers are modulated, the Fourier transform is able to retrieve the delay from a sinusoid with "holes", i.e. with sub-carriers equal to zero.

For example, the first significant peak or the highest peak of the *N*-IDFT is used to estimate of the integer delay *k* where:

$$\tau = kT_s + \beta T_s, \text{ where } k \in \mathbf{Z} \text{ and } \beta \in [-0.5, +0,5[$$

The wireless interface 205 of the receiver Rec comprises a circular shift module 306 which performs the circular shift on the output of the IDFT module 304 which corresponds to the integer delay *k* in order to remove the time offset $\tau$ on the preamble.

It has to be noted here that at this stage, both the time offset $\tau$ and the fractional carrier offset are estimated and removed.

The modulation term due to the time offset $\tau$ being removed from the above mentioned sequence $z_n$, the resulting sequence is a signal equal to one at the position of the demodulated subcarriers and null elsewhere, with a common phase component and additive noise affecting all the subcarriers positions. Ignoring the phase and noise components, this signal is equivalent to a "mask" describing the position of the modulated subcarriers shifted by the integer carrier offset. This signal is described here as the CDS mask of the preamble symbol.

The wireless interface 205 of the receiver Rec comprises a IDFT multiplication module 307 which multiplies the output of the circular shift module by the IDFT of the CDS mask provided by an IDFT CDS mask module 310.

The CDS mask is an array containing binary values equal to one at the indices of the non-zero subcarriers and null values at the indices of the zero subcarriers.

The wireless interface 205 of the receiver Rec comprises a DFT calculation module 308. IDFT multiplication module 307 and DFT calculation module 308 perform a cross-correlation that can be expressed as follows:

$$DFT\left(IDFT(x) \times IDFT(y^*)\right) = \sum_{l=0}^{N-1} x_n \cdot \left(y_N\right)_{n+l}$$

where:

$$\left(y_N\right)_n = \sum_p y_{b-pN}$$

The cross-correlation is achieved in the frequency domain where the first term $x_n$ is the sequence $z_n$ from which the phase ramp due to the time offset has been removed by the circular shift module 306, and the second term $y_n$ is the CDS mask. The IDFT of the CDS mask may be advantageously pre-computed and stored in memory 203. The present invention takes advantageously profit that the IDFT has already been performed by the IDFT module 304. Then, it is not needed to compute the IDFT onto the circular shifted sequence $z_n$.

This IDFT can be obtained by simply applying, by the circular shift module 306, a delay shift onto the output of the IDFT module 304 that served to estimate the time offset $\tau$. This leads to a computationally efficient algorithm where only the last DFT performed by the DFT module 308 needs to be computed.

The wireless interface 205 of the receiver Rec comprises a peak detection module 309 that retrieves the integer frequency carrier offset by an algorithm detecting the highest peak.

It can be noted here that the DFT and peak detection operations required for both the estimation of the delay and the integer carrier frequency offset can be performed using the same hardware and/or software means.

Fig. 3b discloses a block diagram of components of a wireless interface of the receiver for synchronizing OFDM preamble symbols according to a particular mode of realization of the present invention.

It is assumed here that the OFDM preamble symbol does not carry signalling data that are required to demodulate the following symbols and then do not need to be demodulated in that particular purpose.

The wireless interface 205 may be implemented within a Digital Signal Processor, a Field-Programmable Gate Array, an Application-Specific Integrated circuit.

The wireless interface 205 of the receiver Rec comprises a coarse synchronization module 350 which is identical to the coarse synchronization module 300 of Fig. 3a.

The wireless interface 205 of the receiver Rec comprises a fractional frequency offset removal 351 which removes from the received preamble symbol the fractional frequency offset determined by the coarse synchronization module 350.

The wireless interface 205 of the receiver Rec comprises an OFDM demodulation module 352 which performs an OFDM demodulation of the preamble symbol on which fractional frequency offset is removed in a similar way as performed by the OFDM demodulation module 302.

The wireless interface 205 of the receiver Rec comprises a modulation removal module 353 which cancels out the BPSK or QPSK or QAM modulation in a similar way as the one performed by the modulation removal module 303.

The wireless interface 205 of the receiver Rec comprises an Inverse Discrete Fourier Transform (IDFT) module 354 which takes the *N*-IDFT of the complex exponential in as similar way as the one performed by the Inverse Discrete Fourier Transform module 304.

It has to be noted here that in order to facilitate the peak detection, a P-IDFT with $P>N$ and zero padding may be used instead of the *N*-IDFT, in order to improve the resolution of the IDFT.

The wireless interface 205 of the receiver Rec comprises peak detections module 355 which estimates at least a first and a second time offsets $\tau_1$ and $\tau_2$ ($\tau_1 < \tau_2$) on the output of the IDFT module 354 which correspond to the at least two first most significant peaks.

The wireless interface 205 of the receiver Rec comprises a circular shift module 356 which performs the circular shift on the output of the IDFT module 354 which corresponds to the integer delay $k_1$ in order to remove the time offset $\tau_1$ on the preamble symbol.

The wireless interface 205 of the receiver Rec comprises a circular shift module 357 which performs the circular shift on the output of the IDFT module 354 which corresponds to the integer delay $k_2$ in order to remove the time offset $\tau_2$ on the preamble symbol.

The wireless interface 205 of the receiver Rec comprises a multiplier 358 which multiplies the output of the circular shift module 356 by the conjugate of the complex amplitude of the peak corresponding to the time offset $\tau_1$.

The wireless interface 205 of the receiver Rec comprises a multiplier 359 which multiplies the output of the circular shift module 357 by the conjugate of the complex amplitude of the peak corresponding to the time offset $\tau_2$.

The wireless interface 205 of the receiver Rec comprises a summation module 360 which sums the outputs of the multipliers 358 and 359.

The wireless interface 205 of the receiver Rec comprises an IDFT multiplication module 361 which multiplies the output of the summation module 360 by the IDFT of the CDS mask provided by an IDFT CDS mask module 362.

The CDS mask is an array containing binary values equal to one at the indices of the non-zero subcarriers and null values at the indices of the zero subcarriers.

The wireless interface 205 of the receiver Rec comprises a DFT calculation module 363. IDFT multiplication module 361 and DFT calculation module 363 perform a cross-correlation that can be expressed as follows:

$$DFT\left(IDFT(x)\times IDFT(y^*)\right)=\sum_{l=0}^{N-1}x_n\cdot\left(y_N\right)_{n+l}$$

where:

$$\left(y_N\right)_n=\sum_p y_{b-pN}$$

The IDFT of the CDS mask may be advantageously pre-computed and stored in memory 203. The present invention takes advantageously profit that the IDFT has already been performed by the IDFT module 354. Then, it is not needed to compute the IDFT onto the circular shifted sequence $z_n$.

The wireless interface 205 of the receiver Rec comprises a peak detection module 364 that retrieves the integer frequency carrier offset by a peak detection algorithm.

It can be noted here that the DFT and peak detection operations required for both the estimation of the delay and the integer carrier frequency offset can be performed using the same hardware and/or software means.

**Fig. 4** discloses an example of an algorithm executed by the receiver for synchronizing on the OFDM preamble symbols.

It is assumed here that the OFDM preamble symbol does not carry signalling data that are required to demodulate the following symbols and then do not need to be demodulated in that particular purpose.

The present algorithm is executed each time a preamble symbol is received.

The present algorithm may be executed by the processor 200 of the receiver Rec of a DSP not shown in Fig. 2.

At step S400, the processor 200 commands the wireless interface 205 in order to perform a coarse synchronization which performs a coarse synchronization in the time and frequency domains. The coarse synchronization provides an estimate of a first time offset and a fractional frequency offset.

The synchronization is performed in a same way as the one performed by the coarse synchronization module 300.

At next step S401, the processor 200 commands the wireless interface 205 in order to remove, from the received preamble, the fractional frequency offset determined by the coarse synchronization step S400.

At next step S402, the processor 200 commands the wireless interface 205 in order to perform an OFDM demodulation of the preamble which position in the time domain is localized by the first time offset on which fractional frequency offset is removed. The OFDM demodulation is performed by means of a Discrete Fourier Transform (DFT) for example implemented using a FFT algorithm and in a same way as the one performed by the OFDM demodulation module 302.

At next step S403, the processor 200 commands the wireless interface 205 in order to cancel out the BPSK modulation by multiplying the demodulated symbols by themselves in a same way as the one performed by the modulation removal module 303.

At next step S404, the processor 200 commands the wireless interface 205 in order to take the *N*-IDFT or P-IDFT of the complex exponential in a same way as the one performed by the IDFT module 304.

At next step S405, the processor 200 commands the wireless interface 205 in order to detect the first peak at the output of the IDFT which is representative of the time offset $\tau$ in a same way as the one performed by the peak detection module 305. The peak at the output of the IDFT corresponds to the first significant peak for time dispersive channels or to the highest peak.

At next step S406, the processor 200 commands the wireless interface 205 in order to perform a circular shift on the output of the IDFT performed at step S404 in order to compensate for the time offset $\tau$ on the preamble in a same way as the one performed by the circular shift module 306.

At next step S407, the processor 200 commands the wireless interface 205 in order to multiply the output of the circular shift of step S406 to the IDFT of the CDS mask in a same way as the one performed by the multiplication module 307.

At next step S408, the processor 200 commands the wireless interface 205 in order to perform a DFT on the output of the multiplication step S407. IDFT multiplication step and DFT calculation step perform a cross-correlation that can be expressed as follows:

$$DFT\left(IDFT(x)\times IDFT(y^*)\right)=\sum_{l=0}^{N-1}x_n\cdot\left(y_N\right)_{n+l}$$

where:

$$\left(y_N\right)_n=\sum_p y_{b-pN}$$

The cross-correlation is achieved in the frequency domain where the first term $x_n$ is the sequence $z_n$ from which the phase ramp due to the time offset has been removed by the circular shift step S406, and the second term $y_n$ is the CDS mask. The IDFT of the CDS mask may be advantageously pre-computed and stored in memory 203. The present invention takes advantageously profit that the IDFT has already been performed by the IDFT step S404. Then, it is not needed to compute the IDFT onto the circular shifted sequence $z_n$.

This IDFT can be obtained by simply applying, by the circular shift step S406, a delay shift onto the output of the IDFT step S404 that served to estimate the time offset $\tau$. This leads to a computationally efficient algorithin where only the last DFT performed by the DFT step S408 needs to be computed.

At next step S409, the processor 200 commands the wireless interface 205 in order to retrieve the integer frequency carrier offset by a peak detection algorithm in a same way as the one performed by the peak detection module 309.

According to a particular mode of realization of the present invention, the present algorithm comprises further steps S410 and S411.

At step S410, the processor 200 memorizes the integer frequency carrier offset, the time offset and the fractional frequency carrier offset in the RAM memory 203 for consecutive preamble symbols.

At next step S411, the processor 200 filters at least a part of the memorized integer frequency carrier offsets, time offsets and fractional frequency carrier offsets in order to obtain a corrected integer frequency carrier offset, a corrected time offset and a corrected fractional frequency carrier offset based stored measurements.

The corrected integer frequency carrier offset, a corrected time offset and a corrected fractional frequency carrier offset are based on at least one measurement and a weighted version of a given number of past measurements, the given number being, for example, dependent of channel variations.

Fig. 5 discloses a block diagram of components of a wireless interface of the receiver for synchronizing and demodulating OFDM preamble symbols which carry data that need to be demodulated.

OFDM symbols carry data that are critical to parameterize the receiver so as to demodulate the following symbols and then need to be demodulated. For example, OFDM or OFDM like symbols are compliant with the standard ETSI EN 302 755 v1.3.1, "Digital Video Broadcasting (DVB); Frame Structure Channel Coding and Modulation for a Second Generation Digital Terrestrial Television Broadcasting System (DVB-T2)," issued on October 2011.

The DVB-T2 signal is basically transmitted in frames with a maximum duration of 250ms. Each T2-frame comprises one P1 preamble symbol, followed by one or more P2 preamble symbols, followed by a configurable number of data symbols.

The preamble symbol P1 has four main purposes, the fast recognition and identification of a T2 signal, the signaling of the information needed to decode the rest of the preamble and the frequency and timing synchronization.

Preamble symbol P1 is a 1024 points OFDM symbol with two half "guard interval-like" portions added. The total symbol lasts 224$\mu$s in 8 MHz system, comprising the duration of the useful symbol 'A' of the symbol plus two modified guard-interval like sections noted 'C' of 542 samples and 'B' of 482 samples.

Out of the 853 useful subcarriers of a 1024 points OFDM symbol, only 384 are used, leaving others set to zero. The used subcarriers occupy roughly 6.83 MHz band from the middle of the nominal 7.61 MHz signal bandwidth.

The active subcarriers are distributed as follows: out of the 853 carriers of the 1024 points OFDM symbol, the 766 subcarriers from the middle are considered. From these 766 carriers, only 384 subcarriers carry reference symbols; the others are set to zero. The position of the active subcarrier, i.e. the carrier distribution sequence (CDS), is defined according to the concatenation of three complementary sequences.

Active subcarriers are Differentially Binary Phase Shift Keying modulated with a modulation pattern. The modulation pattern encodes two signaling fields S 1 and S2. Up to 8 values and 16 values can be signaled in each signaling field, respectively.

Patterns to encode the field S1 are based on 8 orthogonal sets of 8 complementary sequences of length 8 i.e. the total length of each S1 sequence $CSS_{S1}$ is 64, while sequences to encode the field S2 are based of 16 orthogonal sets of 16 complementary sequences of length 16 i.e. total length of each S2 sequence $CSS_{S2}$ is 256. The modulation sequence is obtained by concatenating the two $CSS_{S1}$ and $CSS_{S2}$ patterns. The $CSS_{S1}$ sequence is attached at both sides of the $CSS_{S2}$ sequence. The 384 sample long sequence is then modulated using DBPSK and scrambled. The resulting samples are mapped onto the active positions of the 1024 available subcarrier positions according to the CDS. The samples are finally OFDM modulated to produce the useful part A of the P1 symbol in the time domain.

In order to improve the robustness of the preamble symbol P1, two guard intervals are defined at both sides of the useful part of the preamble symbol. Instead of cyclic continuation like normal OFDM symbols, a frequency shift version of the symbol is used: Thus, denoting $P_{1C}$, the first guard interval of the preamble symbol, $P_{1A}$ the main part of the preamble symbol and $P_{1B}$ the last guard interval of the preamble symbol, $P_{1C}$ carries the frequency shifted version of the first 542 samples of $P_{1A}$, while $P_{1B}$ conveys the frequency shifted version of the last samples of $P_{1A}$. The frequency shifty $f_{SH}$ applied to $P_{1C}$ and $P_{1B}$ is equal to one subcarrier spacing (1/1024*T*). Denoting the $p_{1A}(t)$ the time domain baseband waveform of the useful part A of the P1 signal, the preamble symbol P1 waveform is generated as follows:

$$p_1(t)=\begin{cases} p_{1A}(t)e^{2j\pi\frac{t}{f_{SH}}} & 0\le t\le 542T \\ p_{1A}(t-542T) & 542T\le t\le 1566T \\ p_{1A}(t-1024T)e^{2j\pi\frac{t}{f_{SH}}} & 1566T\le t\le 2048T \\ 0 & \text{otherwise} \end{cases}$$

As the preamble symbol P1 carries the S1 and S2 signaling fields, it must be demodulated. The encoded information is modulated according to a robust DBPSK modulation so as to enable for a non-coherent demodulation. The phase ramp due to a potential synchronization time offset is critical as the corresponding phase ramp in the frequency domain may made impossible the demodulation of the DBPSK symbols.

The wireless interface 205 of the receiver Rec comprises a coarse synchronization module 500.

The coarse synchronization module 500 for example auto-correlates the received signal with two fixed delays, 542T and 1566*T* with an *a priori* compensation of the frequency shift $f_{SH}$. When the auto-correlation window with the delay of 542T falls on the beginning of part A, then the auto-correlation produces a peak and when the auto-correlation window with the delay of 1566T falls on the beginning of part A, then the auto-correlation produces a peak.

Both peaks enable the coarse time synchronization and the estimation of the fractional carrier offset.

The wireless interface 205 of the receiver Rec comprises a fractional frequency offset removal 501 which removes from the received preamble symbol the fractional frequency offset determined by the coarse synchronization module 501 and extracts from the received signal the parts A, B and C from which the fractional carrier offset is removed.

The wireless interface 205 of the receiver Rec comprises an OFDM demodulation module 502 which performs an OFDM demodulation of the part A on which fractional frequency offset is removed. The OFDM demodulation is performed by means of a Discrete Fourier Transform (DFT). The demodulated symbols are affected by an exponential modulation resulting from the improper time synchronization.

The wireless interface 205 of the receiver Rec comprises a modulation removal module 503 which cancels out the BPSK modulation by multiplying the demodulated symbol by itself in a similar way as the one performed by the modulation removal module 303 in order to obtain a complex exponential with frequency $2\tau/T$.

The wireless interface 205 of the receiver Rec comprises an Inverse Discrete Fourier Transform (IDFT) module 504 which takes the *N*-IDFT of the complex exponential.

The wireless interface 205 of the receiver Rec comprises peak detection module 505 which estimates the time offset $\tau$ on the output of the IDFT module which corresponds to the first significant peak for time dispersive channels or to the highest peak.

It can be noticed that the exponential modulation is weighted by an unknown phase offset that does not affect the detection of the time offset $\tau$. More generally, the observation would also be affected by another unknown phase offset resulting from the mismatch between the source Srct and receiver Rec local oscillators.

For example, the maximum of the *N*-IDFT is used to estimate of the integer delay *k* already disclosed for the peak detection module 305 of Fig. 3.

The wireless interface 205 of the receiver Rec comprises a circular shift module 506 which performs the circular shift on the output of the IDFT module 504 which corresponds to the integer delay *k* in order to remove the time offset $\tau$ on the preamble.

It has to be noted here that at this stage, both the time offset $\tau$ and the fractional carrier offset have been estimated and removed.

The modulation term due to the time offset $\tau$ being removed from the above mentioned sequence $z_n$, the resulting sequence is a signal equal to one at the position of the demodulated subcarriers and null elsewhere, with a common phase component and additive noise affecting all the subcarriers positions. Ignoring the phase and noise components, this signal is equivalent to a "mask" describing the position of the modulated subcarriers shifted by the integer carrier offset. This signal is described here as the CDS mask of the preamble. The CDS mask is an array containing binary values equal to one at the indices of the non-zero subcarriers and null values at the indices of the zero subcarriers.

The wireless interface 205 of the receiver Rec comprises an IDFT multiplication module 507 which multiplies the output of the circular shift module to the IDFT of the CDS mask provided by an IDFT CDS mask module 510.

The wireless interface 205 of the receiver Rec comprises a DFT calculation module 508. IDFT multiplication module 507 and DFT calculation module 508 perform a cross-correlation that can be expressed as follows:

$$DFT\left(IDFT(x)\times IDFT(y^{*})\right)=\sum_{l=0}^{N-1}x_{n}\cdot\left(y_{N}\right)_{n+l}$$

where:

$$\left(y_{N}\right)_{n}=\sum_{p}y_{b-pN}$$

The cross-correlation is achieved in the frequency domain where the first term $x_n$ is the sequence $z_n$ from which the phase ramp due to the time offset has been removed by the circular shift module 506, and the second term $y_n$ is the CDS mask. The IDFT of the CDS mask may be advantageously pre-computed and stored in memory 203. The present invention takes advantageously profit that the IDFT has already been performed by the IDFT module 504. Then, it is not needed to compute the IDFT onto the circular shifted sequence $z_n$.

This IDFT can be obtained by simply applying, by the circular shift module 506, a delay shift onto the output of the IDFT module 504 that served to estimate the time offset $\tau$. This leads to a computationally efficient algorithm where only the last DFT performed by the DFT module 508 needs to be computed.

The wireless interface 205 of the receiver Rec comprises a peak detection module 509 that retrieves the integer frequency carrier offset by an algorithm detecting the highest peak.

It can be noted here that the DFT and peak detection operations required for both the estimation of the delay and the integer carrier frequency offset can be performed using the same hardware and/or software means.

The wireless interface 205 of the receiver Rec comprises a time offset $\tau$ and integer carrier frequency offset removal module 511 which removes from the output of the OFDM demodulation module 502 the time offset $\tau$ determined by the peak detection module 505 and the integer carrier frequency offset determined by the peak detection module 505.

The wireless interface 205 of the receiver Rec comprises a demodulation module 512 which demodulates the output of the time offset $\tau$ and integer carrier frequency offset removal module 511 in order to decode the content of the S1 and S2 signaling fields.

Fig. 6 discloses an example of an algorithm executed by the receiver for synchronizing and demodulating OFDM preamble symbols which carry data that need to be demodulated.

OFDM symbols carry data that are critical to parameterize the receiver so as to demodulate the following symbols and then need to be demodulated.

The present algorithm is executed each time a preamble symbol is received.

At step S600, the processor 200 commands the wireless interface 205 in order to perform a coarse synchronization which performs a coarse synchronization in the time domain. The coarse synchronization further provides a fractional frequency offset.

The synchronization is performed in a same way as the one performed by the coarse synchronization module 500.

At next step S601, the processor 200 commands the wireless interface 205 in order to remove, from the received preamble symbol, the fractional frequency offset determined by the coarse synchronization step S600.

At next step S602, the processor 200 commands the wireless interface 205 in order to perform an OFDM demodulation of the preamble symbol on which fractional frequency offset is removed at the position in the time domain given by the estimated time offset. The OFDM demodulation is performed by means of a Discrete Fourier Transform (DFT) for example implemented using a FFT algorithm and in a same way as the one performed by the OFDM demodulation module 502.

At next step S603, the processor 200 commands the wireless interface 205 in order to cancel out the BPSK modulation by multiplying the demodulated symbol by itself in a same way as the one performed by the modulation removal module 503.

At next step S604, the processor 200 commands the wireless interface 205 in order to take the *N*-IDFT of the complex exponential in a same way as the one performed by the IDFT module 504.

At next step S605, the processor 200 commands the wireless interface 205 in order to detect the peak at the output of the IDFT which is representative of the time offset $\tau$ in a same way as the one performed by the peak detection module 505. The peak at the output of the IDFT corresponds to the first significant peak for time dispersive channels or to the highest peak.

At next step S606, the processor 200 commands the wireless interface 205 in order to perform a circular shift on the output of the IDFT performed at step S604 in order to remove the time offset $\tau$ on the preamble in a same way as the one performed by the circular shift module 506.

At next step S607, the processor 200 commands the wireless interface 205 in order to multiply the output of the circular shift of step S606 to the IDFT of the CDS mask in a same way as the one performed by the multiplication module 307.

At next step S608, the processor 200 commands the wireless interface 205 in order to perform a DFT on the output of the multiplication step S607. IDFT multiplication step and DFT calculation step perform a cross-correlation that can be expressed as follows:

$$DFT\left(IDFT(x)\times IDFT(y^{*})\right)=\sum_{l=0}^{N-1}x_{n}\cdot\left(y_{N}\right)_{n+l}$$

where:

$$\left(y_{N}\right)_{n}=\sum_{p}y_{b-pN}$$

The cross-correlation is achieved in the frequency domain where the first term $x_n$ is the sequence $z_n$ from which the phase ramp due to the time offset has been removed by the circular shift step S606, and the second term $y_n$ is the CDS mask. The IDFT of the CDS mask may be advantageously pre-computed and stored in memory 203. The present invention takes advantageously profit that the IDFT has already been performed by the IDFT step S604. Then, it is not needed to compute the IDFT onto the circular shifted sequence $z_n$.

This IDFT can be obtained by simply applying, by the circular shift step S606, a delay shift onto the output of the IDFT step S604 that served to estimate the time offset $\tau$. This leads to a computationally efficient algorithm where only the last DFT performed by the DFT step S608 needs to be computed.

At next step S609, the processor 200 commands the wireless interface 205 in order to retrieve the integer frequency carrier offset by a peak detection algorithm in a same way as the one performed by the peak detection module 309.

After that, the processor 200 moves to step S612 or moves, according to a particular mode of realization of the present invention, to step S610.

At step S610, the processor 200 memorizes, the integer frequency carrier offset, the time offset and the fractional frequency carrier offset in the RAM memory 203.

At next step S611, the processor 200 filters at least a part of the memorized integer frequency carrier offsets, time offsets and fractional frequency carrier offsets in order to obtain a corrected integer frequency carrier offset, a corrected time offset and a corrected fractional frequency carrier offset based stored measurements.

The corrected integer frequency carrier offset, a corrected time offset and a corrected fractional frequency carrier offset are based on at least one measurement and a weighted version of a given number of past measurements, the given number being, for example, dependent of channel variations.

At next step S612, the processor 200 commands the wireless interface 205 in order to remove from the output of the OFDM demodulation module 502 the time offset $\tau$ determined by the peak detection module 505 and the integer carrier frequency offset determined by the peak detection module 505.

At next step S613, the processor 200 commands the wireless interface 205 in order to demodulate the output of the time offset $\tau$ and integer carrier frequency offset removal module 511 in order to decode the content of the S 1 and S2 signaling fields.

## Claims

**1.** Device for synchronizing a receiver on received preamble symbol modulated by an orthogonal frequency division multiplexing scheme, **characterized in that** the device comprises:

- means for executing a coarse synchronization which provides an estimate of a first time offset and fractional frequency offset,
- means for removing the fractional frequency offset from the preamble symbol,
- means for performing on the symbol period localized by the first estimate of the time offset, an orthogonal frequency division multiplexing demodulation on the preamble symbol on which the fractional frequency offset is removed,
- means for removing from the subcarriers of the demodulated preamble symbol the effect of a phase shift keying modulation,
- means for performing an inverse discrete Fourier transform on the demodulated preamble symbol on which effect of a modulation,
- means for determining a time offset $\tau$ from the output of the inverse discrete Fourier transform,
- means for multiplying an inverse discrete Fourier transform of an array containing binary values equal to one at the indices of the non-zero subcarriers on which the preamble symbol is mapped by the time shifted output of the inverse discrete Fourier transform,
- means for performing a discrete Fourier transform on the output of the multiplying means,
- means for determining an integer carrier frequency offset from the output of the discrete Fourier transform,
- means for compensating the effect of the carrier frequency offset for next received orthogonal division multiplexing symbol using the determined integer carrier frequency offset,
- means for compensating the effect of the time offset for next received orthogonal division multiplexing symbol using the time offset $\tau$.

**2.** Device according to claim 1, **characterized in that**, the effect of the time offset is compensated in the time domain by time shifting the orthogonal frequency division multiplexing demodulation for next received orthogonal division multiplexing symbol using the second time offset or by multiplying the output of the orthogonal frequency division multiplexing demodulation with the conjugate of a complex exponential term due to the second time offset in the frequency domain.

**3.** Device according to claim 1, **characterized in that** the device further comprises:

- means for modifying the output of the orthogonal frequency division multiplexing demodulation by correcting the effect of the second time offset and the integer carrier frequency offset,
- means for demodulating the output of the modified orthogonal frequency division multiplexing demodulation.

**4.** Device according to claim 1, **characterized in that** the preamble symbol is compatible with 3GPP/LTE standard, or compatible with IEEE802.11 or IEEE802.16 standard.

**5.** Device according to claim 3, **characterized in that** the preamble symbol is compatible with Digital Video Broadcasting- Terrestrial standard or Digital Video Broadcasting- Second Generation Terrestrial standard or Integrated Services Digital Broadcasting- Terrestrial standard.

**6.** Device according to any of the claims 1 to 5, **characterized in that** the modulation wherein at least the phase on subcarriers on which preamble symbol is mapped is modified according to the binary information value of the preamble sequence carried by the subcarrier is a Binary Phase Shift keying (BPSK) modulation or a Quadrature Amplitude Modulation (QAM) including the Quaternary Phase Shift keying (QPSK) modulation.

**7.** Method for synchronizing a receiver on received preamble symbol modulated by an orthogonal frequency division multiplexing scheme, **characterized in that** the method comprises the steps of:

- executing a coarse synchronization which provides an estimate of a first time offset and fractional frequency offset,
- removing the fractional frequency offset from the preamble symbol,
- performing on the symbol period localized by the first estimate of the time offset, an orthogonal frequency division multiplexing demodulation on the preamble symbol on which the fractional frequency offset is removed,

- removing from the subcarriers of the demodulated preamble symbol the effect of a phase shift keying modulation,
- performing an inverse discrete Fourier transform on the demodulated preamble symbol on which effect of a modulation,
- determining a time offset $\tau$ from the output of the inverse discrete Fourier transform,
- multiplying an inverse discrete Fourier transform of an array containing binary values equal to one at the indices of the non-zero subcarriers on which the preamble symbol is mapped by the time shifted output of the inverse discrete Fourier transform,
- performing a discrete Fourier transform on the output of the multiplying means,
- determining an integer carrier frequency offset from the output of the discrete Fourier transform,
- compensating the effect of the carrier frequency offset for next received orthogonal division multiplexing symbol using the determined integer carrier frequency offset,
- compensating the effect of the time offset for next received orthogonal division multiplexing symbol using the time offset $\tau$.

**8.** Method according to claim 7, **characterized in that** the method comprises further steps of:

- memorizing plural determined integer frequency carrier offsets, time offsets and fractional frequency carriers on consecutive preamble symbols.
- filtering at least a part of the memorized integer frequency carrier offsets, second time offsets and fractional frequency carrier offsets in order to obtain a corrected integer frequency carrier offset, a corrected time offset and a corrected fractional frequency carrier offset based stored measurements.

**9.** Computer program which can be directly loadable into a programmable device, comprising instructions or portions of code for implementing the steps of the method according to claim 7 or 8 when said computer program is executed on a programmable device.

## Patentansprüche

**1.** Vorrichtung zum Synchronisieren eines Empfängers auf ein empfangenes Präambelsymbol, das durch ein orthogonales Frequenzmultiplexschema moduliert ist, **dadurch gekennzeichnet, dass** die Vorrichtung folgendes aufweist:

- eine Einrichtung zum Ausführen einer groben Synchronisation, die eine Schätzung eines ersten Zeit-Offsets und eines Fraktionsfrequenz-Offsets zur Verfügung stellt,
- eine Einrichtung zum Entfernen des Fraktionsfrequenz-Offsets vom Präambelsymbol,
- eine Einrichtung zum Durchführen einer orthogonalen Frequenzmultiplex-Demodulation an dem Präambelsymbol, an welchem der Fraktionsfrequenz-Offset entfernt ist, bei der durch die erste Schätzung des Zeit-Offsets lokalisierten Symbolperiode,
- eine Einrichtung zum Entfernen des Effekts einer Phasenmodulation von den Hilfsträgern des demodulierten Präambelsymbols,
- eine Einrichtung zum Durchführen einer inversen diskreten Fourier-Transformation an dem demodulierten Präambelsymbol mit Modulationseffekt,
- eine Einrichtung zum Bestimmen eines Zeit-Offsets $\tau$ aus der Ausgabe der inversen diskreten Fourier-Transformation,
- eine Einrichtung zum Multiplizieren einer inversen diskreten Fourier-Transformation eines Felds, das binäre Werte gleich Eins bei den Indizes der Hilfsträger, die nicht Null sind, enthält, auf welche das Präambelsymbol abgebildet ist, mit der zeitlich verschobenen Ausgabe der inversen diskreten Fourier-Transformation,
- eine Einrichtung zum Durchführen einer diskreten Fourier-Transformation an der Ausgabe der Multipliziereinrichtung,
- eine Einrichtung zum Bestimmen eines ganzzahligen Trägerfrequenz-Offsets aus der Ausgabe der diskreten Fourier-Transformation,
- eine Einrichtung zum Kompensieren des Effekts des Trägerfrequenz-Offsets für ein nächstes empfangenes Symbol eines orthogonalen Multiplexens unter Verwendung des bestimmten ganzzahligen Trägerfrequenz-Offsets,
- eine Einrichtung zum Kompensieren des Effekts des Zeit-Offsets für ein nächstes empfangenes Symbol eines orthogonalen Multiplexens unter Verwendung des Zeit-Offsets $\tau$.

2. Vorrichtung nach Anspruch 1, **dadurch gekennzeichnet, dass** der Effekt des Zeit-Offsets im Zeitbereich durch Zeitverschiebung der orthogonalen Frequenzmultiplex-Demodulation für ein nächstes empfangenes Symbol eines orthogonalen Multiplexens unter Verwendung des zweiten Zeit-Offsets oder durch Multiplizieren der Ausgabe der orthogonalen Frequenzmultiplex-Demodulation mit der konjugierten eines komplexen exponentiellen Terms aufgrund des zweiten Zeit-Offsets im Frequenzbereich kompensiert wird.

3. Vorrichtung nach Anspruch 1, **dadurch gekennzeichnet, dass** die Vorrichtung weiterhin folgendes aufweist:

- eine Einrichtung zum Modifizieren der Ausgabe der orthogonalen Frequenzmultiplex-Demodulation durch Korrigieren des Effekts des zweiten Zeit-Offsets und des ganzzahligen Hilfsfrequenz-Offsets,
- eine Einrichtung zum Demodulieren der Ausgabe der modifizierten orthogonalen Frequenzmultiplex-Demodulation.

4. Vorrichtung nach Anspruch 1, **dadurch gekennzeichnet, dass** das Präambelsymbol mit dem 3GPP/LTE-Standard kompatibel ist oder mit dem IEEE802.11- oder IEEE802.16-Standard kompatibel ist.

5. Vorrichtung nach Anspruch 3, **dadurch gekennzeichnet, dass** das Präambelsymbol mit dem Standard für terrestrisches Digitalfernsehen oder dem Standard für terrestrisches Digitalfernsehen der zweiten Generation oder Standard für terrestrischen dienstintegrierten digitalen Rundfunk kompatibel ist.

6. Vorrichtung nach einem der Ansprüche 1 bis 5, **dadurch gekennzeichnet, dass** die Modulation, bei welcher wenigstens die Phase an Hilfsträgern, auf welche ein Präambelsymbol abgebildet ist, gemäß dem binären Informationswert der durch den Hilfsträger getragenen Präambelsequenz modifiziert wird, eine binäre Phasenmodulation (BPSK) oder eine Quadraturamplitudenmodulation (QAM) einschließlich der quaternären Phasenmodulation (QPSK) ist.

7. Verfahren zum Synchronisieren eines Empfängers auf ein empfangenes Präambelsymbol, das durch ein orthogonales Frequenzmultiplexschema moduliert ist, **dadurch gekennzeichnet, dass** das Verfahren die folgenden Schritte aufweist:

- Ausführen einer groben Synchronisation, die eine Schätzung eines ersten Zeit-Offsets und eines Fraktionsfrequenz-Offsets zur Verfügung stellt,
- Entfernen des Fraktionsfrequenz-Offsets vom Präambelsymbol,
- Durchführen einer orthogonalen FrequenzmultiplexDemodulation an dem Präambelsymbol, an welchem der Fraktionsfrequenz-Offset entfernt ist, bei der durch die erste Schätzung des Zeit-Offsets lokalisierten Symbolperiode,
- Entfernen des Effekts einer Phasenmodulation von den Hilfsträgern des demodulierten Präambelsymbols,
- Durchführen einer inversen diskreten Fourier-Transformation an dem demodulierten Präambelsymbol mit Modulationseffekt,
- Bestimmen eines Zeit-Offsets $\tau$ aus der Ausgabe der inversen diskreten Fourier-Transformation,
- Multiplizieren einer inversen diskreten Fourier-Transformation eines Felds, das binäre Werte gleich Eins bei den Indizes der Hilfsträger, die nicht Null sind, enthält, auf welche das Präambelsymbol abgebildet ist, mit der zeitlich verschobenen Ausgabe der inversen diskreten Fourier-Transformation,
- Durchführen einer diskreten Fourier-Transformation an der Ausgabe der Multipliziereinrichtung,
- Bestimmen eines ganzzahligen Trägerfrequenz-Offsets aus der Ausgabe der diskreten Fourier-Transformation,
- Kompensieren des Effekts des Trägerfrequenz-Offsets für ein nächstes empfangenes Symbol eines orthogonalen Multiplexens unter Verwendung des bestimmten ganzzahligen Trägerfrequenz-Offsets,
- Kompensieren des Effekts des Zeit-Offsets für ein nächstes empfangenes Symbol eines orthogonalen Multiplexens unter Verwendung des Zeit-Offsets $\tau$.

8. Verfahren nach Anspruch 7, **dadurch gekennzeichnet, dass** das Verfahren folgende weitere Schritte aufweist:

- Speichern mehrerer bestimmter ganzzahliger Frequenzträger-Offsets, Zeit-Offsets und Fraktionsfrequenzträger auf aufeinanderfolgenden Präambelsymbolen,
- Filtern wenigstens eines Teils der gespeicherten ganzzahligen Frequenzträger-Offsets, zweiten Zeit-Offsets und Fraktionsfrequenzträger-Offsets, um auf einem korrigierten Frequenzträger-Offset, einem korrigierten Zeit-Offset und einem korrigierten FraktionsfrequenzträgerOffset basierende gespeicherte Messungen zu erhalten.

9. Computerprogramm, das direkt ladbar in eine programmierbare Vorrichtung sein kann und Anweisungen oder Teilbereiche eines Codes zum Implementieren der Schritte des Verfahrens nach Anspruch 7 oder 8 umfasst, wenn das Computerprogramm auf einer programmierbaren Vorrichtung ausgeführt wird.

**Revendications**

1. Dispositif de synchronisation d'un récepteur sur un symbole de préambule reçu modulé par un schéma de multiplexage par répartition en fréquences orthogonales, **caractérisé en ce que** le dispositif comporte:

   - des moyens pour exécuter une synchronisation grossière qui fournit un premier décalage temporel et un décalage de fréquence fractionnaire,
   - des moyens pour éliminer le décalage de fréquence fractionnaire du symbole de préambule,
   - des moyens pour effectuer sur la période de symbole localisée par la première estimation de décalage temporel, une démodulation par multiplexage par répartition en fréquences orthogonales sur le symbole de préambule sur lequel le décalage de fréquence fractionnaire est éliminé,
   - des moyens pour éliminer des sous-porteuses du symbole de préambule démodulé l'effet d'une modulation par changement de phase,
   - des moyens pour effectuer une transformée de Fourier discrète inverse sur le symbole de préambule démodulé sur lequel l'effet de la modulation est enlevé,
   - des moyens pour déterminer un décalage temporel $\tau$ à partir de la sortie de la transformée de Fourier discrète inverse,
   - des moyens pour multiplier une transformée de Fourier discrète inverse d'un ensemble contenant des valeurs binaires égales à un sur les indices des sous-porteuses non nulles sur lesquelles le symbole de préambule est mappé par la sortie de la transformée de Fourrier inverse décalée temporellement,
   - des moyens pour effectuer une transformée de Fourier discrète sur le signal de sortie des moyens de multiplication,
   - des moyens pour déterminer un décalage de fréquence porteuse entier à partir de la sortie de la transformée de Fourier discrète,
   - des moyens pour compenser l'effet du décalage de fréquence porteuse pour le prochain symbole de multiplexage par répartition en fréquences orthogonales reçu en utilisant le décalage de fréquence porteuse entier déterminé,
   - des moyens pour compenser l'effet du décalage temporel pour le prochain symbole de multiplexage par répartition en fréquences orthogonales reçu en utilisant le décalage temporel $\tau$.

2. Dispositif selon la revendication 1, **caractérisé en ce que** l'effet du décalage temporel est compensé dans le domaine temporel en décalant temporellement la démodulation par multiplexage par répartition en fréquences orthogonales du prochain symbole de multiplexage par répartition en fréquences orthogonales reçu à l'aide du second décalage temporel ou en multipliant la sortie de la démodulation par multiplexage par répartition en fréquences orthogonales avec le conjugué d'un terme exponentiel complexe dû au second décalage temporel dans le domaine fréquentiel.

3. Dispositif selon la revendication 1, **caractérisé en ce que** le dispositif comporte en outre:

   - des moyens pour modifier la sortie de la démodulation par multiplexage par répartition en fréquences orthogonales en corrigeant l'effet du second décalage temporel et du décalage de fréquence porteuse entier,
   - des moyens pour démoduler la sortie de la démodulation par multiplexage par répartition en fréquences orthogonales modifiée.

4. Dispositif selon la revendication 1, **caractérisé en ce que** le symbole de préambule est compatible avec la norme 3GPP / LTE, ou compatible avec la norme IEEE 802.11 ou IEEE802.16.

5. Dispositif selon la revendication 3, **caractérisé en ce que** le symbole de préambule est compatible avec la norme de diffusion de vidéo numérique terrestre ou de la norme de diffusion de vidéo numérique terrestre seconde génération ou la norme de diffusion numérique de services intégrés terrestres.

6. Dispositif selon l'une quelconque des revendications 1 à 5, **caractérisé en ce que** la modulation dans laquelle au moins la phase des sous-porteuses sur lesquelles le symbole de préambule est mappé est modifiée en fonction de la valeur de l'information binaire portée par la sous-porteuse de la séquence de préambule est une modulation par changement de phase binaire ou une modulation d'amplitude en quadrature (QAM) incluant la modulation par changement de phase en quadrature (QPSK).

**7.** Procédé de synchronisation d'un récepteur sur un symbole de préambule reçu modulé par un schéma de multiplexage par répartition en fréquences orthogonales, **caractérisé en ce que** le procédé comporte les étapes de :

- exécution d'une synchronisation grossière qui fournit un premier décalage temporel et un décalage de fréquence fractionnaire,
- élimination du décalage de fréquence fractionnaire du symbole de préambule,
- exécution sur la période de symbole localisée par la première estimation de décalage temporel, d'une démodulation par multiplexage par répartition en fréquences orthogonales sur le symbole de préambule sur lequel le décalage de fréquence fractionnaire est éliminé,
- élimination des sous-porteuses du symbole de préambule démodulé de l'effet d'une modulation par changement de phase,
- exécution d'une transformée de Fourier discrète inverse sur le symbole de préambule démodulé sur lequel l'effet de la modulation est enlevé,
- détermination d'un décalage temporel $\tau$ à partir de la sortie de la transformée de Fourier discrète inverse,
- multiplication d'une transformée de Fourier discrète inverse d'un ensemble contenant des valeurs binaires égales à un sur les indices des sous-porteuses non nulles sur lesquelles le symbole de préambule est mappé par la sortie de la transformée de Fourrier inverse décalée temporellement,
- exécution d'une transformée de Fourier discrète sur le signal de sortie des moyens de multiplication,
- détermination d'un décalage de fréquence porteuse entier à partir de la sortie de la transformée de Fourier discrète,
- compensation de l'effet du décalage de fréquence porteuse pour le prochain symbole de multiplexage par répartition en fréquences orthogonales reçu en utilisant le décalage de fréquence porteuse entier déterminé,
- compensation de l'effet du décalage temporel pour le prochain symbole de multiplexage par répartition en fréquences orthogonales reçu en utilisant le décalage temporel $\tau$.

**8.** Procédé selon la revendication 7, **caractérisé en ce que** le procédé comporte en outre les étapes de:

- mémorisation d'une pluralité de décalages de fréquence porteuse entiers déterminés, de décalages temporels et décalages de fréquence porteuse fractionnaires sur des symboles de préambule consécutifs.
- filtrage d'au moins une partie des décalages de fréquence porteuse entiers déterminés, des décalages temporels et des décalages de fréquence porteuse fractionnaires afin d'obtenir un décalage de fréquence porteuse entier corrigé, un décalage temporel corrigé et un décalage de fréquence porteuse fractionnaire corrigé à partir des mesures enregistrées.

**9.** Programme d'ordinateur qui peut être directement chargeable dans un dispositif programmable, comportant des instructions ou portions de code pour mettre en oeuvre les étapes du procédé selon la revendication 7 ou 8 lorsque ledit programme informatique est exécuté sur un dispositif programmable.

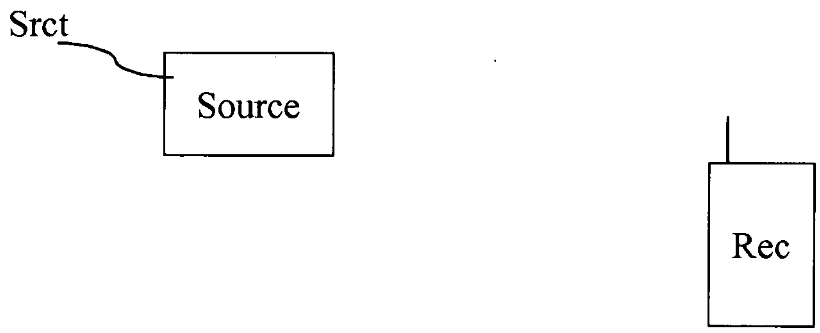
Srct
Source
Rec

Fig. 1

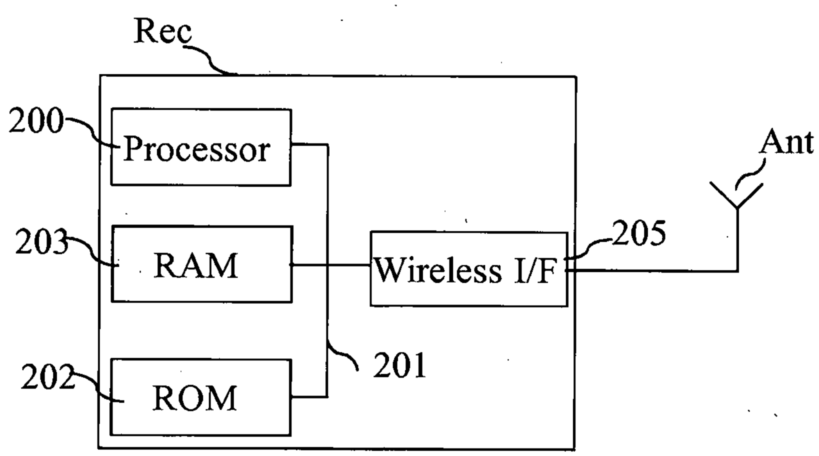
Rec
200
Processor
203
RAM
202
ROM
201
Wireless I/F
205
Ant

Fig. 2

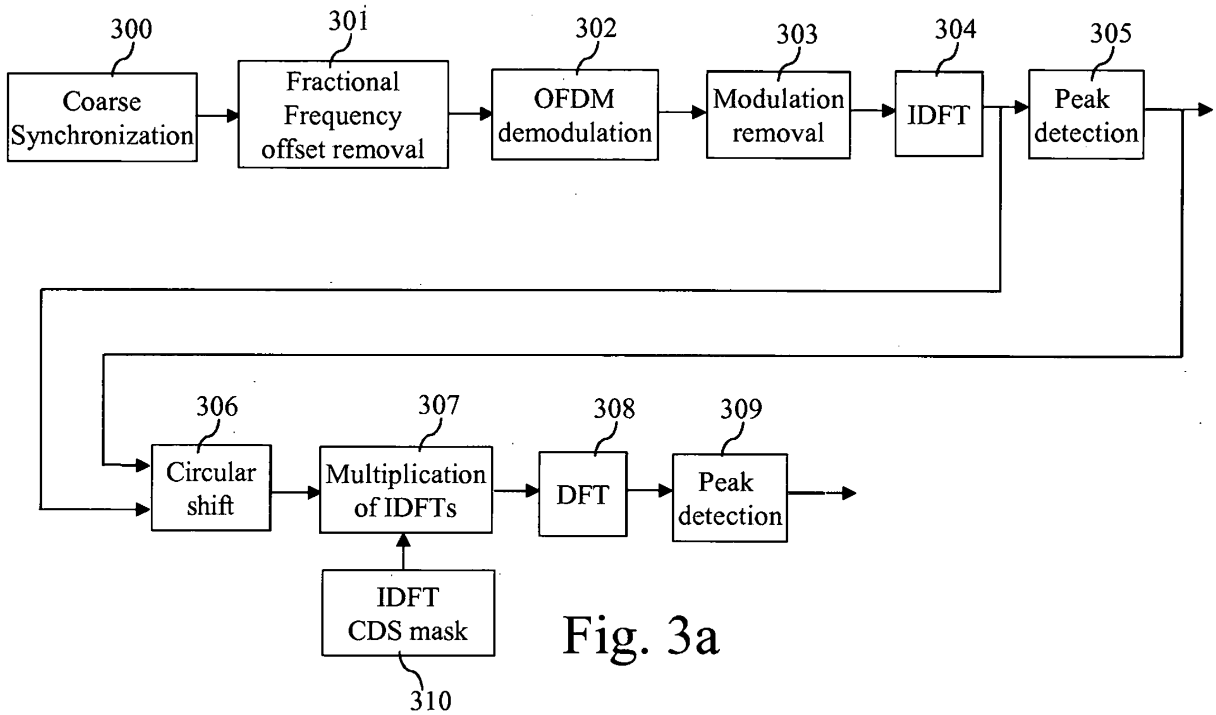
300
Coarse Synchronization
301
Fractional Frequency offset removal
302
OFDM demodulation
303
Modulation removal
304
IDFT
305
Peak detection
306
Circular shift
307
Multiplication of IDFTs
308
DFT
309
Peak detection
IDFT CDS mask
310

Fig. 3a

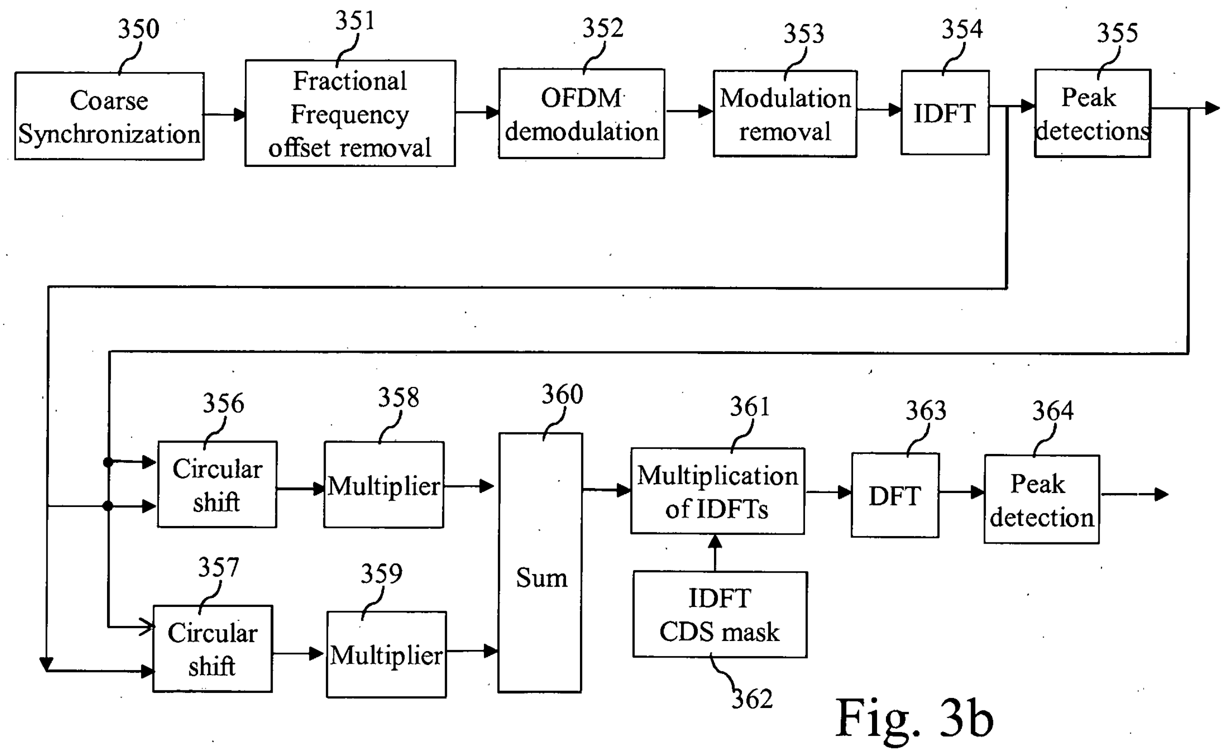
350
Coarse Synchronization
351
Fractional Frequency offset removal
352
OFDM demodulation
353
Modulation removal
354
IDFT
355
Peak detections
356
Circular shift
358
Multiplier
360
Sum
361
Multiplication of IDFTs
363
DFT
364
Peak detection
357
Circular shift
359
Multiplier
IDFT CDS mask
362

Fig. 3b

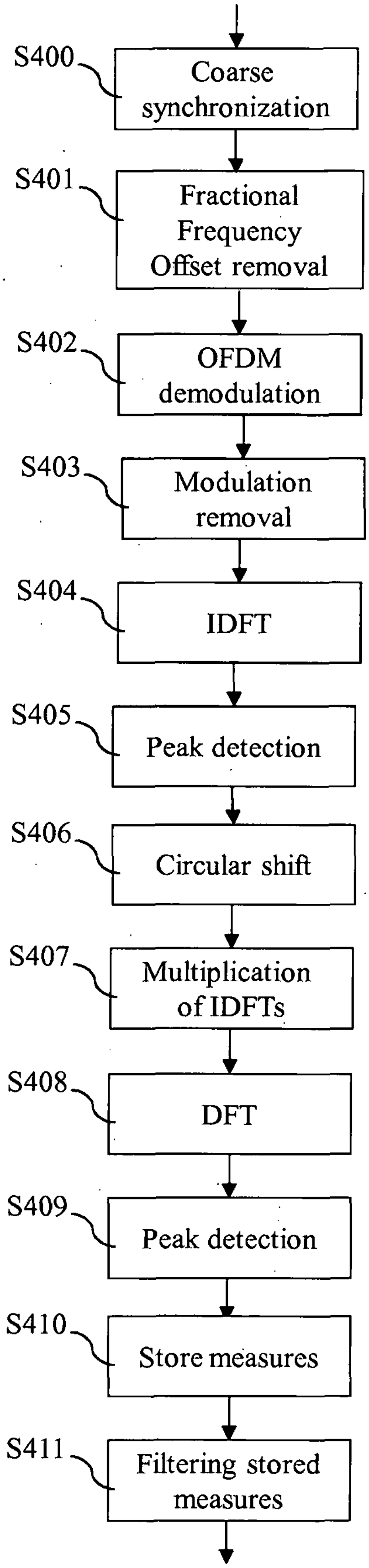
S400
Coarse synchronization
S401
Fractional Frequency Offset removal
S402
OFDM demodulation
S403
Modulation removal
S404
IDFT
S405
Peak detection
S406
Circular shift
S407
Multiplication of IDFTs
S408
DFT
S409
Peak detection
S410
Store measures
S411
Filtering stored measures

Fig. 4

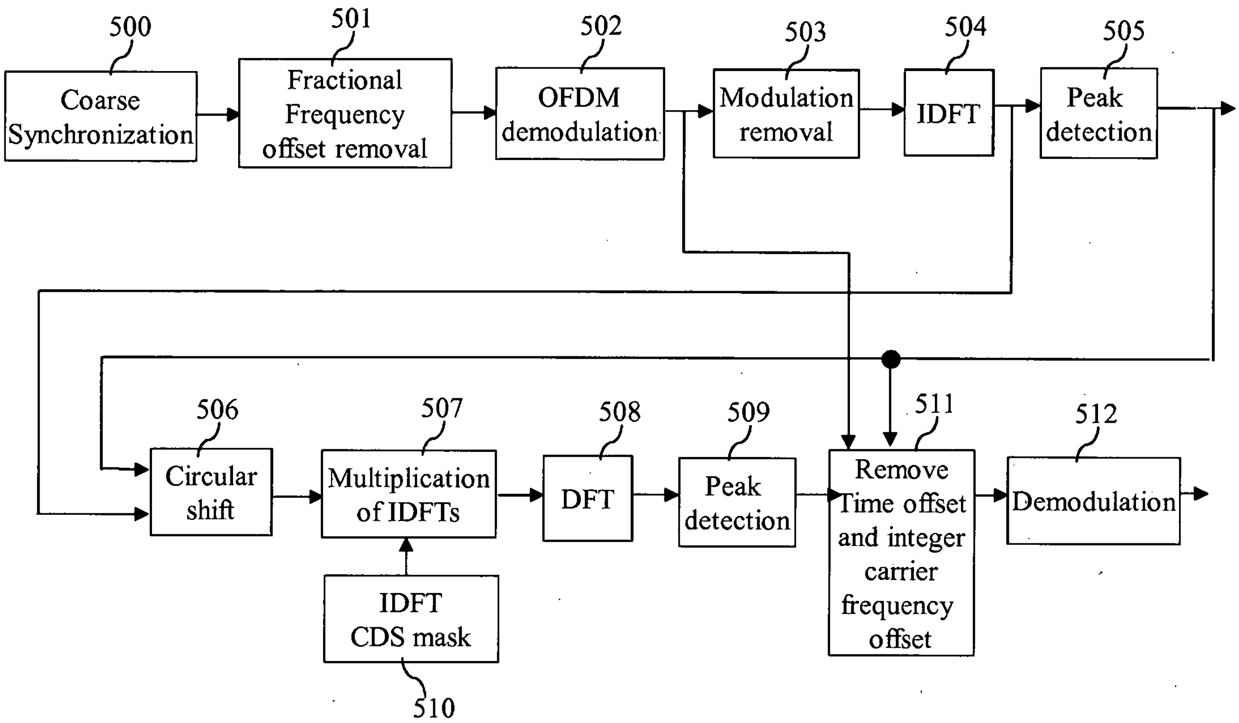
500
Coarse Synchronization
501
Fractional Frequency offset removal
502
OFDM demodulation
503
Modulation removal
504
IDFT
505
Peak detection
506
Circular shift
507
Multiplication of IDFTs
508
DFT
509
Peak detection
511
Remove Time offset and integer carrier frequency offset
512
Demodulation
IDFT CDS mask
510

Fig. 5

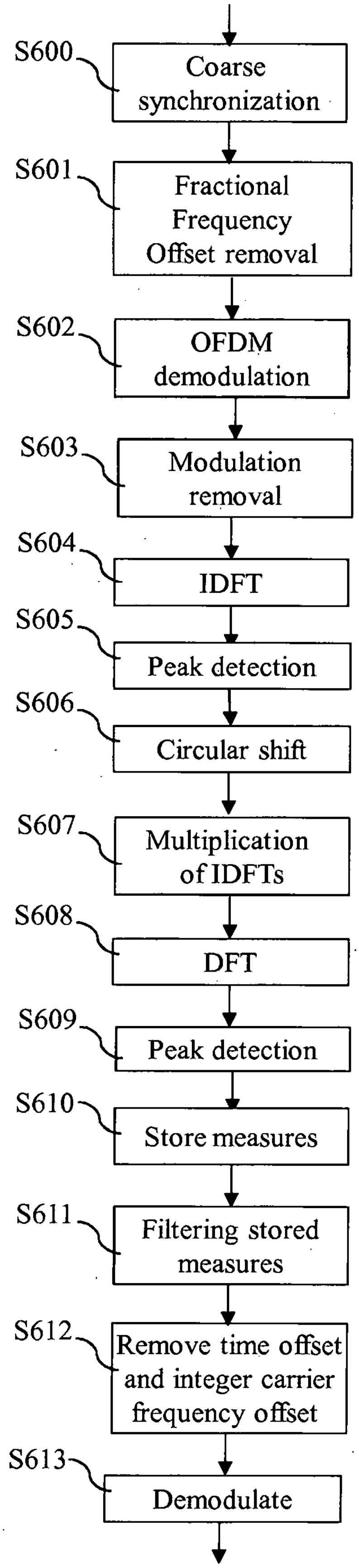
S600
Coarse synchronization
S601
Fractional Frequency Offset removal
S602
OFDM demodulation
S603
Modulation removal
S604
IDFT
S605
Peak detection
S606
Circular shift
S607
Multiplication of IDFTs
S608
DFT
S609
Peak detection
S610
Store measures
S611
Filtering stored measures
S612
Remove time offset and integer carrier frequency offset
S613
Demodulate

Fig. 6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 1178642 A


### Non-patent literature cited in the description


- Digital Video Broadcasting (DVB); Frame Structure Channel Coding and Modulation for a Second Generation Digital Terrestrial Television Broadcasting System (DVB-T2). *ETSI EN 302 755 v1.3.1,* October 2011